Europäisches Patentamt

European Patent Office

Office européen des brevets

(19)

(11) Veröffentlichungsnummer: **0 182 066**
**B1**

(12) **EUROPÄISCHE PATENTSCHRIFT**

(45) Veröffentlichungstag der Patentschrift:
14.09.88

(21) Anmeldenummer: 85112741.5

(22) Anmeldetag: 08.10.85

(51) Int. Cl.⁴: **H 01 B 3/40**, C 08 G 59/22,
C 08 G 59/42, C 08 L 63/00

(54) Vergussmasse für elektrische und elektonische Bauelemente und -gruppen.

(30) Priorität: 12.10.84 DE 3437548

(43) Veröffentlichungstag der Anmeldung:
28.05.86 Patentblatt 86/22

(45) Bekanntmachung des Hinweises auf die Patenterteilung:
14.09.88 Patentblatt 88/37

(84) Benannte Vertragsstaaten:
DE FR GB IT

(56) Entgegenhaltungen:
DE - A - 1 465 213
GB - A - 2 003 157
US - A - 4 401 775

CHEMICAL ABSTRACTS, Band 83, Nr. 20, 17. November
1975, Seite 39, Nr. 165101k, Columbus, Ohio, US
CHEMICAL ABSTRACTS, Band 100, Nr. 22, 28. Mai 1984,
Seite 34, Nr. 175806c, Columbus, Ohio, US; A. HUSSAIN:
"Stress induced void formation in CTBN-modified
cycloaliphatic epoxies"
CHEMICAL ABSTRACTS, Band 100, Nr. 2, 9. Januar
1984, Seite 57, Nr. 8004h, Columbus, Ohio, US

(73) Patentinhaber: Siemens Aktiengesellschaft Berlin und
München, Wittelsbacherplatz 2, D-8000 München 2 (DE)

(72) Erfinder: Hussain, Amir, Dr. rer. nat., Dipl.-Chem.,
Bellinzonastrasse 6, D-8000 München 71 (DE)
Erfinder: v. Stein, Christian, Dipl.-Ing.,
Reinekestrasse 22, D-8000 München 90 (DE)
Erfinder: Pflugbeil, Christa, Dipl.-Ing. FH,
Eichendorffweg 17, D-8021 Hohenschäftlarn (DE)

## Beschreibung

Die Erfindung betrifft eine Vergussmasse für elektrische und elektronische Bauteile und -gruppen, insbesondere für thermisch belastete Bauteile. Unter thermisch belasteten Bauteilen sind Bauteile zu verstehen, die während des Betriebes hohe Temperaturspitzen aufweisen. Es ist für die Lebensdauer solcher Geräte wichtig, durch die Vergussmasse möglichst viel Wärme abzuführen.

Die Aushärtung von Epoxidharzmassen ist ein exothermer Vorgang, das heisst eine chemische Reaktion, die unter Wärmeabgabe verläuft. Der durch die Exothermie bewirkte Temperaturanstieg ist um so grösser, je schlechter die Wärmeableitung des Giesslings ist. Durch die Beimischung von Füllstoffen wird der sonst häufig stürmische Verlauf der Vernetzung stark gemässigt und die exotherme Temperaturspitze wesentlich erniedrigt.

Bisher hat man die Wärmeleitung der Vergussmasse, zum Beispiel Epoxidmasse, durch den Zusatz von hohen Mengen Aluminiumoxid steigern können (Circuits Manufacturing, Febr. 1984, Seiten 89 bis 96; insbesondere Seite 90). Bei höherem Zusatz körniger Füllstoffe ergeben sich Schlagzähigkeiten, die teilweise wesentlich unter den Werten des ungefüllten Harzsystems liegen. Die Herabsetzung der Schlagzähigkeit der Harzmasse führt zur Rissneigung bei Temperaturschocks und dadurch zu Ausfällen bei vergossenen Bauteilen.

Der Erfindung liegt die Aufgabe zugrunde, die Zusammensetzung für eine gefüllte, zähelastifizierte Vergussmasse anzugeben, die die Wärme in vergossenen Bauteilen gut abführt und extremen Temperaturschocks standhält. Diese Aufgabe wird durch eine Vergussmasse gelöst, die entsprechend den Merkmalen des Anspruchs 1 zusammengesetzt ist.

Diese Vergussmasse hat folgende Vorteile:

a) hohe Wärmeleitfähigkeit
($>$1,8 W/mK), Glasumwandlungstemperatur ($>$100 °C) und spez. Durchgangswiderstand ($>1^{12}$ Ohm/cm),

b) der Ausdehnungskoeffizient der Masse $>30.16^{-6}/$ °C,

c) Das Giessharzsystem besitzt durch Kautschukmodifikation hohe Schlagzähigkeit und

d) die Dielektrizitätskonstante ist gleichbleibend bis 100 °C.

Eine derartig zusammengesetzte Vergussmasse zeigt gute Verträglichkeit mit den Bauelementen und weist ausserdem ausgezeichnete Haftfestigkeit auf. Darüber hinaus zeichnet sich diese Umhüllung durch ausserordentliche Festigkeit gegenüber Rissbildung aus. Dank der Zähelastifizierung dieser Masse, die durch den flüssigen Kautschuk erzielt wird, werden die sonstigen Design bedingten Probleme bei elektrischen bzw. elektronischen Bauelementen behoben.

Die im Anspruch 1 aufgeführten Bestandteile werden gemäss einer Weiterbildung der Erfindung vorzugsweise nach dem folgenden Schema verarbeitet (GT = Gewichtsteile)

| | |
|---|---|
| Cycloaliphatisches Harz | 50–100 GT |
| Bisphenol-A-Epoxidharz | 0–50 GT |
| Copolymer CTBN | 5–15 GT |
| Beschleuniger DMP-30 | 1 GT |
| Härter MeHHPSA | 90 GT |
| Füllstoff-Gemisch | 450–500 GT |

Diese Bestandteile werden wie folgt verarbeitet:

- Harzkomponenten und flüssiges Copolymer werden auf 80 °C erwärmt und evakuiert,
- Füllstoff wird homogen vermischt,
- Harzansatz wird mit anteilmässigem Füllstoff vermengt und evakuiert (Komponente A)
- Härter und Beschleuniger (und je nach Bedarf Füllstoff) werden vermischt und evakuiert (Komponente B),
- Komponente A und Komponente B werden erneut vermengt und evakuiert.

## Patentansprüche

1. Vergussmasse für elektrische und elektronische Bauteile und -gruppen, insbesondere für thermisch belastete Bauteile, dadurch gekennzeichnet, dass sie aus folgenden Bestandteilen besteht:

Cycloaliphatisches Harz, das heisst 3,4-Epoxycyclohexylmethyl-(3,4-epoxy)-cyclohexan-carboxylat,

flüssiges Diglycidyläther-Bisphenol-A-Epoxidharz mit Epoxidäquivalent = 5,3–5,8 Ep-Äquivalent/kg,

Copolymer aus Butadien und Acrylnitril mit endständigen Carboxylgruppen (CTBN),

Tris-(dimethylaminomethyl)-phenol (DMP-30),

Methylhexahydrophtalsäureanhydrid (MeHHPSA) und

Füllstoff-Gemisch bestehend aus Edelkorund und Aluminium-Kügelchen bzw. -Plätzchen.

2. Vergussmasse nach Anspruch 1, dadurch gekennzeichnet, dass sich die Bestandteile nach folgendem Schema zusammensetzen (GT = Gewichtsteile):

| | |
|---|---|
| Cycloaliphatisches Harz | 50–100 GT |
| Bisphenol-A-Epoxidharz | 0–50 GT |
| Copolymer CTBN | 5–15 GT |
| Beschleuniger DMP-30 | 1 GT |
| Härter MeHHPSA | 90 GT |
| Füllstoff-Gemisch | 450–500 GT |

3. Verfahren zur Herstellung einer Vergussmasse nach den Ansprüchen 1 und 2, dadurch gekennzeichnet, dass diese Bestandteile wie folgt verarbeitet werden:

- Harzkomponenten und flüssiges Copolymer werden auf 80 °C erwärmt und evakuiert,
- Füllstoff wird homogen vermischt,
- Harzansatz wird mit anteilmässigem Füllstoff vermengt und evakuiert (Komponente A),

– Härter und Beschleuniger (und je nach Bedarf Füllstoff) werden yermischt und evakuiert (Komponente B),
– Komponente A und Komponente B werden erneut vermengt und evakuiert.

## Claims

1. Sealing compounds for electrical and electronic components and component groups, particularly for thermally loaded components, characterised in that they consist or the following constituents:
– cycloaliphatic resin, i. e. 3,4-epoxy-cyclo-hexylmethyl-(3,4-epoxy)-cyclohexane-carboxylate,
– liquid diglycidyl ether-bisphenol-A-epoxy resin with epoxy equivalent = 5.3–5.8 Ep-equivalent/kg,
– copolymer of butadiene and acrylonitrile with terminal carboxyl groups (CTBN),
– tris-(dimethylaminomethyl)-phenol (DMP-30),
– methylhexahydrophthalic anhydride (MeHHPSA) and
– filler mixture consisting of noble corundum and aluminium spherules and/or platelets.

2. Sealing compounds according to claim 1, characterised in that the constituents are combined according to the following scheme (PW = parts by weight):

| | |
|---|---|
| cycloaliphatic resin | 50–100 PW |
| bisphenol-A-epoxy resin | 0–50 PW |
| copolymer CTBN | 5–15 PW |
| accelerator DMP-30 | 1 PW |
| hardener MeHHPSA | 90 PW |
| filler mixture | 450–500 PW |

3. Process for the preparation of a sealing compound according to claims 1 and 2, characterised in that these constituents are processed as follows:
– resin components and liquid copolymer are heated to 80 °C and evacuated,
– fillers are homogeneously mixed,
– resin ingredients are mixed with a portion of the filler and evacuated (component A),
– hardener and accelerator (and according to requirements filler) are mixed and evacuated (component B),
– component A and component B are freshly mixed and evacuated.

## Revendications

1. Masse de scellement pour composants ou ensembles de composants électriques et électroniques, notamment pour composants chargés thermiquement, caractérisée en ce qu'elle comprend les constituants suivants«
–Résine cycloaliphatique, c'est-à-dire du 3,4-époxycyclohexane-carboxylate de 3,4-époxycyclohexylméthyle;
–résine époxydique liquide de l'éther diglycidylique du bisphénol-A ayant un équivalent d'époxyde de 5,3 à 5,8 équivalent d'époxyde kg;
–copolymère de butadiène et d'acrylonitrile à groupes d'extrémité carboxylique (CTBN);
–tris(diméthylaminométhyl)-phénol (DMP-30);
– anhydride de l'acide méthylhexahydrophthalique (MeHHPSA) et
–mélange de charge constitué de corindon raffiné et de sphérules ou plaquettes d'aluminium.

2. Masse de scellement suivant la revendication 1, caractérisée en ce qu'elle se compose de la manière suivante (GT = partie en poids):

| | |
|---|---|
| Résine cycloaliphatique | 50 à 100 GT |
| Résine époxyde du bisphénol-A | 0 à 50 GT |
| Copolymère CTBN | 5 à 15 GT |
| Accélérateur DMP-30 | 1 GT |
| Durcisseur MeHHPSA | 90 GT |
| Mélange d'une charge | 450 à 500 GT |

3. Procédé de préparation d'une masse de scellement suivant la revendication 1 ou 2, caractérisé en ce qu'il consiste à traiter ces constituants de la manière suivante:
– on porte les constituants de résine et le copolymère liquide à 80 °C et on les met sous vide;
– on mélange la charge de manière homogène;
– on mélange la préparation de résine à une proportion adéquate de charge et on met sous vide (constituant A);
– on mélange le durcisseur et l'accélérateur (et suivant les boisons la charge) et on met sous vide (constituant B);
    on mélange à nouveau les constituants A et les constituants B et on les met sous vide.